# EUROPEAN PATENT APPLICATION

(11) **EP 4 836 176 A1**
(43) Date of publication of application: **04.11.2026**
(21) Application number: 24910715.2
(22) Date of filing: 11.12.2024
(51) Int. Cl.: H01M 50/552, H01M 50/567, H01M 50/147, H01M 50/547, H01M 50/543

(54) **BATTERY CELL COVER PLATE AND BATTERY**

(30) Priority: 25.12.2023 CN 202311802092
(71) Applicant: SVOLT Energy Technology Co., Ltd., Changzhou, Jiangsu 213200 (CN)
(72) Inventor: GONG, Weihong, hangzhou, Jiangsu 213200 (CN); SHEN, Liangjun, hangzhou, Jiangsu 213200 (CN); SUN, Chao, hangzhou, Jiangsu 213200 (CN); YUAN, Yue, hangzhou, Jiangsu 213200 (CN); HOU, Zhanrui, hangzhou, Jiangsu 213200 (CN); ZHOU, Jie, hangzhou, Jiangsu 213200 (CN)
(74) Representative: Michalski Hüttermann & Partner mbB
(86) International application number: PCT/CN2024/138362
(87) International publication number: WO 2025/139784

(57) **Abstract**

The present application relates to the technical field of batteries, and discloses a battery cell cover plate and a battery. The battery cell cover plate comprises: a cover plate body through which a mounting hole is formed; a pole provided with a limiting portion directly or indirectly abutted and fixed to one side surface of the cover plate body, a body step portion connected to the limiting portion and at least partially passing through the mounting hole, and a middle-diameter step portion and a top-diameter step portion sequentially provided on the side of the body step portion distant from the limiting portion; and a riveting block riveted to the middle-diameter step portion and the top-diameter step portion, so that the riveting block is directly or indirectly abutted against the other side surface of the cover plate body, wherein along the radial direction of the pole, the diameter of the middle-diameter step portion is d2, the diameter of the top-diameter step portion is d3, and 0.05≤(d3-d2)/d3≤0.5. The battery cover plate provided in the present application avoids the situation where the tensile resistance performance deteriorates due to the excessively small load-bearing surface on the top of the pole, effectively ensures the structural strength of the cover plate, and improves the safe use performance of the battery.

## Description

### CROSS-REFERENCE TO THE RELATED APPLICATIONS

The present application claims priority to Chinese Patent Application No. 202311802092.0, filed with the China National Intellectual Property Administration on December 25, 2023, and entitled "Battery Cell Cover Plate and Battery", the contents of which are incorporated herein by reference in entirety.

### TECHNICAL FIELD

The present application relates to the technical field of batteries, and specifically to a battery cell cover plate and a battery.

### BACKGROUND

With the continuous development of the battery industry, lithium-ion batteries, with their advantage of high energy density, are widely used in the field of power batteries to provide power for vehicle operation. During vehicle operation, power batteries are subjected to forces such as pushing and pulling forces and twisting forces from various directions, resulting in demanding working conditions and environments. Among these, the cover plate structure of the battery cell is an important component for ensuring the overall strength and safety performance of the battery, and the connection strength of the cover plate structure and the strength of the cover plate itself are particularly important. However, in the prior art, the connection strength of the cover plate structure is not effectively ensured, resulting in a certain defective rate and potential safety hazards.

### SUMMARY

In view of this, the present application provides a battery cell cover plate and a battery to solve the problem that the connection strength of the cover plate structure is not effectively ensured, resulting in a certain defective rate.

In a first aspect, the present application provides a battery cell cover plate, including:
a cover plate body, through which a mounting hole is formed;
a terminal (pole), provided with a limiting portion directly or indirectly abutting against and fixed to one side surface of the cover plate body, a main step portion (body step portion) connected to the limiting portion and at least partially passing through the mounting hole, and a middle-diameter step portion and a top-diameter step portion sequentially provided on a side of the main step portion remote from the limiting portion; and
a riveting block, riveted to the middle-diameter step portion and the top-diameter step portion, such that the riveting block directly or indirectly abuts against the other side surface of the cover plate body,
where along a radial direction of the terminal, the middle-diameter step portion has a diameter d2, and the top-diameter step portion has a diameter d3, satisfying 0.05 ≤ (d3 - d2)/d3 ≤ 0.5.

Beneficial effects are as follows: In the battery cell cover plate according to the embodiment of the present application, the terminal is riveted onto the cover plate body by the riveting block. Moreover, along the radial direction of the terminal, the lower limit of the difference between the diameter d3 of the top-diameter step portion and the diameter d2 of the middle-diameter step portion is limited so as to avoid the occurrence of deterioration of the tensile resistance performance due to an excessively small load-bearing surface at the top of the terminal, and the upper limit of the difference between the diameter d3 of the top-diameter step portion and the diameter d2 of the middle-diameter step portion is limited so as to avoid an excessive weight caused by an overly large dimension of the terminal, thereby improving the energy density of the battery and avoiding excessive costs. The structural strength of the cover plate can be effectively ensured, and the safe use performance of the battery can be enhanced.

In an optional embodiment, along the radial direction of the terminal, the main step portion has a diameter d1, satisfying 0.05 ≤ (d1 - d2)/d1 ≤ 0.5, where 4 mm ≤ d1 ≤ 20 mm, and d1 ≥ d3 > d2.

In an optional embodiment, the riveting block has a riveting hole axially penetrating therethrough, a first inner hole portion is formed in a region of the riveting hole corresponding to the middle-diameter step portion, and a second inner hole portion is formed in a region of the riveting hole corresponding to the top-diameter step portion;
the first inner hole portion has an inner hole diameter D1, satisfying 0.05 mm ≤ D1 - d2 ≤ 0.5 mm; and
the second inner hole portion has an inner hole diameter D2, satisfying 0.05 mm ≤ D2 - d3 ≤ 0.5 mm.

In an optional embodiment, a top surface of the top-diameter step portion is flush with a top edge of the second inner hole portion; and the terminal and the riveting block are welded and connected in a region where the top surface of the top-diameter step portion is in contact with the second inner hole portion.

In an optional embodiment, along the radial direction of the terminal, a third inner hole portion is formed in a region of the riveting hole which does not overlap with the terminal in radial projection, where the third inner hole portion has an inner hole diameter d3, satisfying 0.8 mm ≤ D3 - D2 ≤ 4 mm, and D3 > D2 > D1.

In an optional embodiment, along the radial direction of the riveting hole, a distance from the second inner hole portion to an edge of the riveting block is A,
A = (L - D2)/2 is satisfied, where L is a total width of the riveting block along the radial direction of the riveting hole, a specific dimension of L satisfies: 10 mm ≤ L ≤ 50 mm, and a specific dimension of A satisfies: 2 mm ≤ A ≤ 10 mm.

In an optional embodiment, along an axial direction of the terminal, a dimension of the top-diameter step portion lapped against a region of the riveting block corresponding to the first inner hole portion is B, satisfying B = (d3 - D1)/2, where a specific dimension of B satisfies: 0.25 mm ≤ B ≤ 1 mm; and
along the axial direction of the terminal, a dimension of the main step portion lapped against the region of the riveting block corresponding to the first inner hole portion is C, satisfying C = (d1 - D1)/2, where a specific dimension of C satisfies: 0.3 mm ≤ C ≤ 2 mm.

In an optional embodiment, along the radial direction of the riveting hole, a distance between an edge of the third inner hole portion and an edge of the riveting block is E, satisfying E = (L - D3)/2, where a specific dimension of E satisfies: 1.5 mm ≤ E ≤ 6 mm.

In an optional embodiment, along the axial direction of the riveting hole, a total height of the riveting block is H, where a specific dimension of H satisfies: 2 mm ≤ H ≤ 6 mm;
along the axial direction of the riveting hole, a height difference between a top surface of the riveting block and a top surface of the top-diameter step portion is H1, where a specific dimension of H1 satisfies: 0.1 mm ≤ H1 ≤ 0.5 mm;
along the axial direction of the riveting hole, a height of an overlapping region between the top-diameter step portion and the second inner hole portion is H2, where a specific dimension of H2 satisfies: 1 mm ≤ H2 ≤ 2.5 mm; and
along the axial direction of the riveting hole, a height of an overlapping region between the middle-diameter step portion and the first inner hole portion is H3, where a specific dimension of H3 satisfies: 1 mm ≤ H3 ≤ 3 mm, and H3 ≥ H2 > H1.

In a second aspect, the present application further provides a battery, including the battery cell cover plate as described in the above.

Since the battery includes the battery cell cover plate, it has the same effects as those of the battery cell cover plate, which will not be described in detail herein.

### BRIEF DESCRIPTION OF THE DRAWINGS

In order to more clearly illustrate the technical solutions of specific embodiments of the present application or of the prior art, drawings required to be used in the description of the specific embodiments or the prior art will be described briefly below. It is obvious that the drawings described below are merely illustrative of some embodiments of the present application. Those ordinarily skilled in the art could obtain other drawings according to these drawings without making inventive efforts.
FIG. 1 is a perspective schematic view of a battery cell cover plate according to the present application;
FIG. 2 is a top view of the battery cell cover plate according to the present application;
FIG. 3 is a schematic sectional view taken along line A-A in FIG. 2;
FIG. 4 is a schematic sectional view of a terminal according to the present application;
FIG. 5 is a schematic sectional view of a riveting block according to the present application;
FIG. 6 is a first sectional view of the battery cell cover plate; and
FIG. 7 is a second sectional view of the battery cell cover plate.

### Description of Reference Numerals:

1: cover plate body; 2: insulating member;
3: riveting block; 31: first inner hole portion; 32: second inner hole portion; 33: third inner hole portion;
4: terminal; 41: limiting portion; 42: main step portion; 43: middle-diameter step portion; 44: top-diameter step portion.

### DETAILED DESCRIPTION OF THE EMBODIMENTS

In order to make the objectives, technical solutions, and advantages of the embodiments of the present application more clear, the technical solutions in the embodiments of the present application will be described below clearly and completely with reference to the drawings in the embodiments of the present application. It is apparent that the embodiments to be described are some, but not all of the embodiments of the present application. All the other embodiments obtained by those skilled in the art in light of the embodiments of the present application without making inventive efforts will fall within the scope of the present application as claimed.

In the description of the present application, it should be noted that the terms such as "center", "up", "down", "left", "right", "vertical", "horizontal", "inside", and "outside" indicate the orientation or positional relationships shown based on the drawings, and are intended only to facilitate the description of the present application and simplify the description, but not intended to indicate or imply that the referred devices or elements must be in a particular orientation or constructed or operated in the particular orientation, and thus should not be construed as limiting the present application. In addition, the terms "first", "second", and "third" are used for descriptive purposes only, and should not be understood as an indication or implication of relative importance.

In the description of the present application, it should be noted that the terms "mount", "couple", "join", and "connect" should be understood in a broad sense unless otherwise expressly specified or defined. For example, a connection may be a fixed connection or detachable connection or integral connection, may be mechanical connection or electric connection, or may be direct coupling or indirect coupling via an intermediate medium or internal communication between two elements. The specific meanings of the above-mentioned terms in the present application can be understood by those ordinarily skilled in the art according to specific situations.

Furthermore, the technical features involved in different embodiments of the present application described below may be combined with each other as long as they do not conflict with each other.

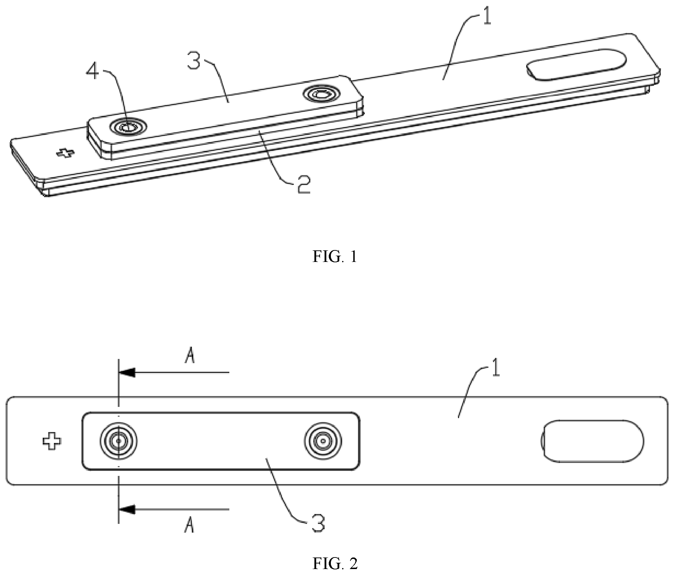

Embodiments of the present application are described below with reference to FIGS. 1 to 7.

According to embodiments of the present application, in one aspect, a battery cell cover plate is provided, including:
a cover plate body 1, through which a mounting hole is formed;
a terminal 4, provided with a limiting portion 41 directly or indirectly abutting against and fixed to one side surface of the cover plate body 1, a main step portion 42 connected to the limiting portion 41 and at least partially passing through the mounting hole, and a middle-diameter step portion 43 and a top-diameter step portion 44 sequentially provided on a side of the main step portion 42 remote from the limiting portion 41; and
a riveting block 3, riveted to the middle-diameter step portion 43 and the top-diameter step portion 44, such that the riveting block 3 directly or indirectly abuts against the other side surface of the cover plate body 1, where
along a radial direction of the terminal 4, the middle-diameter step portion 43 has a diameter d2, and the top-diameter step portion 44 has a diameter d3, satisfying 0.05 ≤ (d3 - d2)/d3 ≤ 0.5.

In the battery cell cover plate provided in embodiments of the present application, the terminals 4 are riveted onto the cover plate body 1 by the riveting block 3. Moreover, along the radial direction of each terminal 4, by limiting the lower limit of a difference between the diameter d3 of the top-diameter step portion 44 and the diameter d2 of the middle-diameter step portion 43, the occurrence of deterioration of the tensile resistance performance due to an excessively small load-bearing surface at the top of the terminal 4 is avoided; and by limiting the upper limit of the difference between the diameter d3 of the top-diameter step portion 44 and the diameter d2 of the middle-diameter step portion 43, an excessive weight caused by an overly large dimension of the terminal 4 is avoided, improving the energy density of the battery and avoiding excessive costs. The structural strength of the cover plate can be effectively ensured, and the safe use performance of the battery can be enhanced.

Moreover, by limiting the lower limit of the difference between the diameter d3 of the top-diameter step portion 44 and the diameter d2 of the middle-diameter step portion 43, the connection strength of the cover plate structure can be effectively ensured, and the defective rate can be reduced.

In the present embodiment, a specific range of the difference between the diameter d3 of the top-diameter step portion 44 and the diameter d2 of the middle-diameter step portion 43 may be 0.5 mm ≤ d3 - d2 ≤ 5 mm. Optionally, the value of the difference between the diameter d3 of the top-diameter step portion 44 and the diameter d2 of the middle-diameter step portion 43 may be 0.5 mm, 1 mm, 1.5 mm, 2 mm, 2.5 mm, 3 mm, 4 mm, 4.5 mm, 5 mm, or the like.

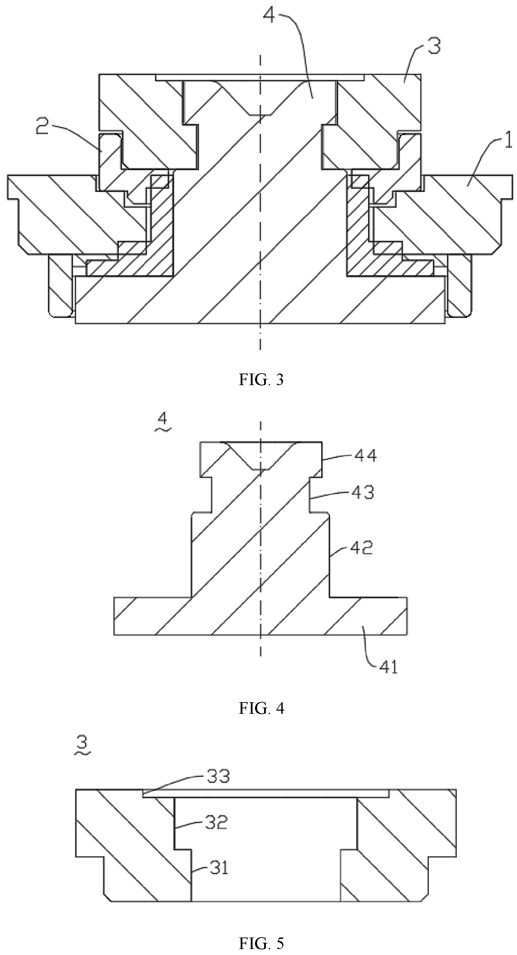

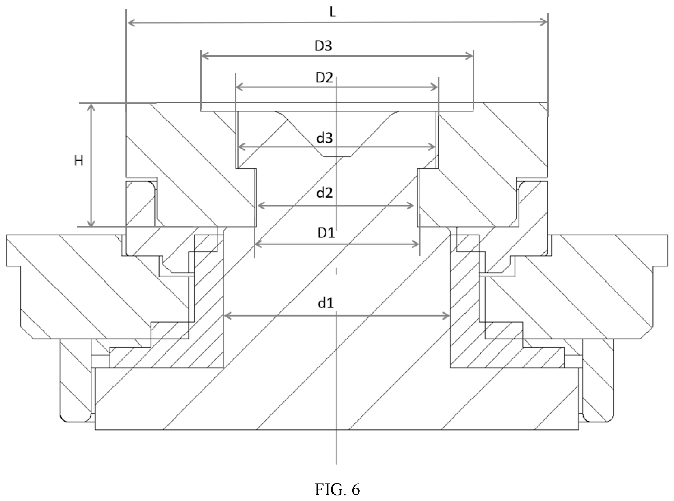

In some embodiments, as shown in FIGS. 4 and 6, along the radial direction of the terminal 4, the main step portion 42 has a diameter d1, satisfying 0.05 ≤ (d1 - d2)/d1 ≤ 0.5, where 4 mm ≤ d1 ≤ 20 mm, and d1 ≥ d3 > d2.

By limiting the lower limit of the diameter d1 of the main step portion 42, a current-flowing area of the terminal 4 can be ensured, allowing the terminal to meet the overall current-flowing requirements of the battery cell. By limiting the upper limit of the diameter d1 of the main step portion 42, an excessive weight caused by an overly large dimension of the terminal 4 is avoided, the energy density of the battery is improved, and excessive costs are avoided.

As shown in FIG. 6, the diameter d1 of the main step portion 42 is greater than the diameter d2 of the middle-diameter step portion 43. Moreover, by limiting the lower limit of the difference between the diameter d1 of the main step portion 42 and the diameter d2 of the middle-diameter step portion 43, a sufficient load-bearing area of the main portion of the terminal 4 can be ensured, the occurrence of poor push resistance performance is avoided, the structural strength of the cover plate can be effectively ensured, and the safe use performance of the battery can be enhanced. By limiting the upper limit of the difference between the diameter d1 of the main step portion 42 and the diameter d2 of the middle-diameter step portion 43, an excessive weight caused by an overly large dimension of the terminal 4 is avoided, improving the energy density of the battery and avoiding excessive costs.

In the present embodiment, a specific range of the difference between the diameter d1 of the main step portion 42 and the diameter d2 of the middle-diameter step portion 43 may be 0.5 mm ≤ d1 - d2 ≤ 5 mm. Optionally, the value of the difference between the diameter d1 of the main step portion 42 and the diameter d2 of the middle-diameter step portion 43 may be 0.5 mm, 1 mm, 1.5 mm, 2 mm, 2.5 mm, 3 mm, 4 mm, 4.5 mm, 5 mm, or the like.

In some embodiments, as shown in FIGS. 5 and 6, the riveting block 3 has a riveting hole axially penetrating therethrough, a first inner hole portion 31 is formed in a region of the riveting hole corresponding to the middle-diameter step portion 43, and a second inner hole portion 32 is formed in a region of the riveting hole corresponding to the top-diameter step portion 44;
the first inner hole portion 31 has an inner hole diameter D1, satisfying 0.05 mm ≤ D1 - d2 ≤ 0.5 mm;
the second inner hole portion 32 has an inner hole diameter D2, satisfying 0.05 mm ≤ D2 - d3 ≤ 0.5 mm.

By causing the middle-diameter step portion 43 with a slightly smaller diameter to correspond to the first inner hole portion 31, and allowing, at an end remote from the cover plate body 1, the top-diameter step portion 44 with a larger diameter than the middle-diameter step portion 43 to correspond to the second inner hole portion 32, the riveting block 3 is engaged with the terminals 4, and the fixation of the terminals 4 can be achieved through the abutment of the riveting block 3 against the cover plate body 1.

Optionally, an insulating member 2 is further provided between the riveting block 3 and the cover plate body 1, functioning to seal the riveting hole and the through hole, while ensuring insulation between the terminals 4 and the cover plate body 1.

By limiting the lower limit of the difference between the inner hole diameter D1 of the first inner hole portion 31 and the diameter d2 of the middle-diameter step portion 43, the occurrence of assembling difficulty due to an excessively small gap between the riveting block 3 and the terminal 4 during the assembling stage is avoided. Meanwhile, by limiting the upper limit of the difference between the inner hole diameter D1 of the first inner hole portion 31 and the diameter d2 of the middle-diameter step portion 43, insufficient riveting expansion caused by an excessively large gap can be avoided, preventing insufficient overall strength of the terminals.

Optionally, a value of the difference between the inner hole diameter D1 of the first inner hole portion 31 and the diameter d2 of the middle-diameter step portion 43 may be 0.05 mm, 0.08 mm, 0.1 mm, 0.22 mm, 0.35 mm, 0.47 mm, 0.5 mm, or the like.

By limiting the lower limit of the difference between the inner hole diameter D2 of the second inner hole portion 32 and the diameter d3 of the top-diameter step portion 44, the occurrence of assembling difficulty due to an excessively small gap between the riveting block 3 and the terminal 4 during the assembling stage is avoided. Meanwhile, by limiting the upper limit of the difference between the inner hole diameter D2 of the second inner hole portion 32 and the diameter d3 of the top-diameter step portion 44, an excessively large gap affecting the welding between the top-diameter step portion 44 and the riveting block 3 can be avoided, thereby avoiding the occurrence of an excessive internal resistance of the terminal.

Optionally, a value of the difference between the inner hole diameter D2 of the second inner hole portion 32 and the diameter d3 of the top-diameter step portion 44 may be 0.05 mm, 0.08 mm, 0.1 mm, 0.22 mm, 0.35 mm, 0.47 mm, 0.5 mm, or the like.

In some embodiments, as shown in FIG. 3, a top surface of the top-diameter step portion 44 is flush with a top edge of the second inner hole portion 32, and the terminal 4 and the riveting block 3 are welded and connected in a region where the top surface of the top-diameter step portion 44 is in contact with the second inner hole portion 32. This facilitates the connection between the terminal 4 and the riveting block 3.

In some embodiments, as shown in FIG. 6, along the radial direction of the terminal 4, a third inner hole portion 33 is formed in a region of the riveting hole which does not overlap with the terminal 4 in radial projection. The third inner hole portion 33 has an inner hole diameter D3, satisfying 0.8 mm ≤ D3 - D2 ≤ 4 mm, and D3 > D2 > D1.

By limiting the lower limit of the difference between the inner hole diameter D3 of the third inner hole portion 33 and the inner hole diameter D2 of the second inner hole portion 32, a sufficient welding region can be ensured between the riveting block 3 and the terminal 4, thereby ensuring the welding strength.

Optionally, a value of the difference between the inner hole diameter D3 of the third inner hole portion 33 and the inner hole diameter D2 of the second inner hole portion 32 may be 0.8 mm, 1 mm, 1.5 mm, 2 mm, 2.5 mm, 3 mm, 4 mm, or the like.

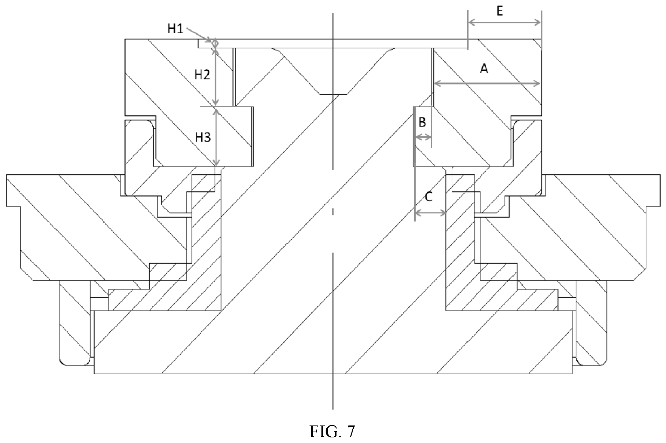

In some embodiments, as shown in FIG. 7, along the radial direction of the riveting hole, a distance from the second inner hole portion 32 to an edge of the riveting block 3 is A,
A = (L - D2)/2 is satisfied, where L is a total width of the riveting block 3 along the radial direction of the riveting hole, a specific dimension of L satisfies: 10 mm ≤ L ≤ 50 mm, and a specific dimension of A satisfies: 2 mm ≤ A ≤ 10 mm.

Optionally, a value of the total width L of the riveting block 3 along the radial direction of the riveting hole satisfies 10 mm ≤ L ≤ 50 mm. By limiting the lower limit of the total width L of the riveting block 3 along the radial direction of the riveting hole, it can be ensured that the riveting block 3 has a sufficient area for busbar welding.

By limiting the lower limit of the distance A from the second inner hole portion 32 to the edge of the riveting block 3, the strength of the cover plate can be ensured, allowing the riveting block 3 to have a load-bearing surface with sufficient thickness, and ensuring structural reliability. By limiting the upper limit of the distance A from the second inner hole portion 32 to the edge of the riveting block 3, an excessive weight caused by an overly large dimension of the riveting block 3 is avoided, improving the energy density of the battery, and avoiding excessive costs.

Optionally, a value of the distance A from the second inner hole portion 32 to the edge of the riveting block 3 may be 2 mm, 3.5 mm, 4 mm, 5.5 mm, 6 mm, 8 mm, 9 mm, 10 mm, or the like.

In some embodiments, as shown in FIG. 7, along an axial direction of the terminal 4, a dimension of the top-diameter step portion 44 lapped against a region of the riveting block 3 corresponding to the first inner hole portion 31 is B, satisfying B = (d3 - D1)/2, where a specific dimension of B satisfies: 0.25 mm ≤ B ≤ 1 mm.

Along the axial direction of the terminal 4, a dimension of the main step portion 42 lapped against the region of the riveting block 3 corresponding to the first inner hole portion 31 is C, satisfying C = (d1 - D1)/2, where a specific dimension of C satisfies: 0.3 mm ≤ C ≤ 2 mm.

By limiting the lower limit of the dimension B of the top-diameter step portion 44 lapped against the region of the riveting block 3 corresponding to the first inner hole portion 31, the axial tensile resistance performance of the terminal can be ensured, the structural strength is enhanced, and loosening of the riveting block 3 caused by an excessive force exerted thereon is avoided.

Optionally, a value of the dimension B of the top-diameter step portion 44 lapped against the region of the riveting block 3 corresponding to the first inner hole portion 31 may be 0.25 mm, 0.6 mm, 0.8 mm, 1 mm, or the like.

By limiting the lower limit of the dimension C of the main step portion 42 lapped against the region of the riveting block 3 corresponding to the first inner hole portion 31, the axial push resistance performance of the terminal can be ensured, the structural strength is guaranteed, and deformation of the riveting block 3 caused by an excessive force exerted thereon is avoided.

Optionally, a value of the dimension C of the main step portion 42 lapped against the region of the riveting block 3 corresponding to the first inner hole portion 31 may be 0.3 mm, 0.6 mm, 0.8 mm, 1 mm, 1.2 mm, 1.5 mm, 2 mm, or the like.

In some embodiments, as shown in FIG. 7, along the radial direction of the riveting hole, a distance between an edge of the third inner hole portion 33 and the edge of the riveting block 3 is E, satisfying E = (L - D3)/2, where a specific dimension of E satisfies: 1.5 mm ≤ E ≤ 6 mm.

By limiting the dimension of the distance E between the edge of the third inner hole portion 33 and the edge of the riveting block 3, while the overall strength of the cover plate can be ensured, a sufficient welding region is left for the terminal 4 and the riveting block 3. If E is too small, the strength of the riveting block 3 will be insufficient. If E is too large, the welding area between the terminal 4 and the riveting block 3 will be insufficient, further leading to poor welding strength.

Optionally, a value of the distance E between the edge of the third inner hole portion 33 and the edge of the riveting block 3 may be 1.5 mm, 2 mm, 2.3 mm, 2.6 mm, 3 mm, 3.6 mm, 3.9 mm, 4.2 mm, 4.5 mm, 5 mm, 5.5 mm, 6 mm, or the like.

In some embodiments, as shown in FIG. 7, along the axial direction of the riveting hole, a total height of the riveting block 3 is H, where a specific dimension of H satisfies: 2 mm ≤ H ≤ 6 mm;
along the axial direction of the riveting hole, a height difference between a top surface of the riveting block 3 and a top surface of the top-diameter step portion 44 is H1, where a specific dimension of H1 satisfies: 0.1 mm ≤ H1 ≤ 0.5 mm;
along the axial direction of the riveting hole, a height of an overlapping region between the top-diameter step portion 44 and the second inner hole portion 32 is H2, where a specific dimension of H2 satisfies: 1 mm ≤ H2 ≤ 2.5 mm;
along the axial direction of the riveting hole, a height of an overlapping region between the middle-diameter step portion 43 and the first inner hole portion 31 is H3, where a specific dimension of H3 satisfies: 1 mm ≤ H3 ≤ 3 mm, and H3 ≥ H2 > H1.

By limiting the lower limit of the total height H of the riveting block 3, the strength of the riveting block 3 can be ensured, thereby ensuring the overall strength of the battery cell cover plate. By limiting the upper limit of the total height H of the riveting block 3, an excessive weight caused by an overly large dimension of the riveting block 3 is avoided, the energy density of the battery is improved, the internal space of the battery is prevented from being affected, and excessively high costs are avoided.

Herein, H may be calculated by the formula as follows: H = H1 + H2 + H3.

Optionally, a value of the total height H of the riveting block 3 may be 2 mm, 2.3 mm, 2.6 mm, 3 mm, 3.6 mm, 3.9 mm, 4.2 mm, 4.5 mm, 5 mm, 5.5 mm, 6 mm, or the like.

By limiting the lower limit of the height difference H1 between the top surface of the riveting block 3 and the top surface of the top-diameter step portion 44, it can be ensured that a sufficient region is left for welding the riveting block 3 and the terminal 4, avoiding outward protrusion of a weld seam that would affect the busbar welding, and preventing the occurrence of insufficient overall battery strength due to pseudo welding.

Optionally, the value of the height difference H1 between the top surface of the riveting block 3 and the top surface of the top-diameter step portion 44 may be 0.1 mm, 0.2 mm, 0.3 mm, 0.4 mm, 0.5 mm, or the like.

By limiting the lower limit of the height H2 of the overlapping region between the top-diameter step portion 44 and the second inner hole portion 32, the tensile resistance performance of the terminal 4 and the overall strength of the cover plate can be ensured, avoiding the occurrence of insufficient strength of the cover plate. By limiting the upper limit of the height H2 of the overlapping region between the top-diameter step portion 44 and the second inner hole portion 32, an excessive weight caused by an overly large dimension of the riveting block 3 is avoided, the energy density of the battery is improved, and excessive costs are avoided.

Optionally, a value of the height H2 of the overlapping region between the top-diameter step portion 44 and the second inner hole portion 32 may be 1 mm, 1.2 mm, 1.5 mm, 2 mm, 2.5 mm, or the like.

By limiting the lower limit of the height H3 of the overlapping region between the middle-diameter step portion 43 and the first inner hole portion 31, the push resistance performance of the terminal 4 and the overall strength of the cover plate can be ensured, avoiding the occurrence of insufficient strength of the cover plate. By limiting the upper limit of the height H3 of the overlapping region between the middle-diameter step portion 43 and the first inner hole portion 31, an excessive weight caused by an overly large dimension of the riveting block 3 is avoided, the energy density of the battery is improved, and excessive costs are avoided.

Optionally, a value of the height H3 of the overlapping region between the middle-diameter step portion 43 and the first inner hole portion 31 may be 1 mm, 1.5 mm, 2 mm, 2.5 mm, 3 mm, or the like.

A detailed description is given below with reference to the drawings and in conjunction with examples, focusing on the actual testing of the key dimensions A, B, and C that affect the push-pull resistance performance of the cover plate, and comparing the test results. The test data is shown in detail in Table 1.

Example 1: Nine cover plates were selected, and univariate factor comparative tests were conducted on the three parameters A, B, and C, respectively. Push-pull force values of 600 N, 800 N, 1000 N, and 1200 N were applied sequentially in gradient, followed by a helium leak test. A helium leak rate <1*10⁻⁷ Pa·m³/s was considered as passing the test.

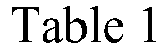

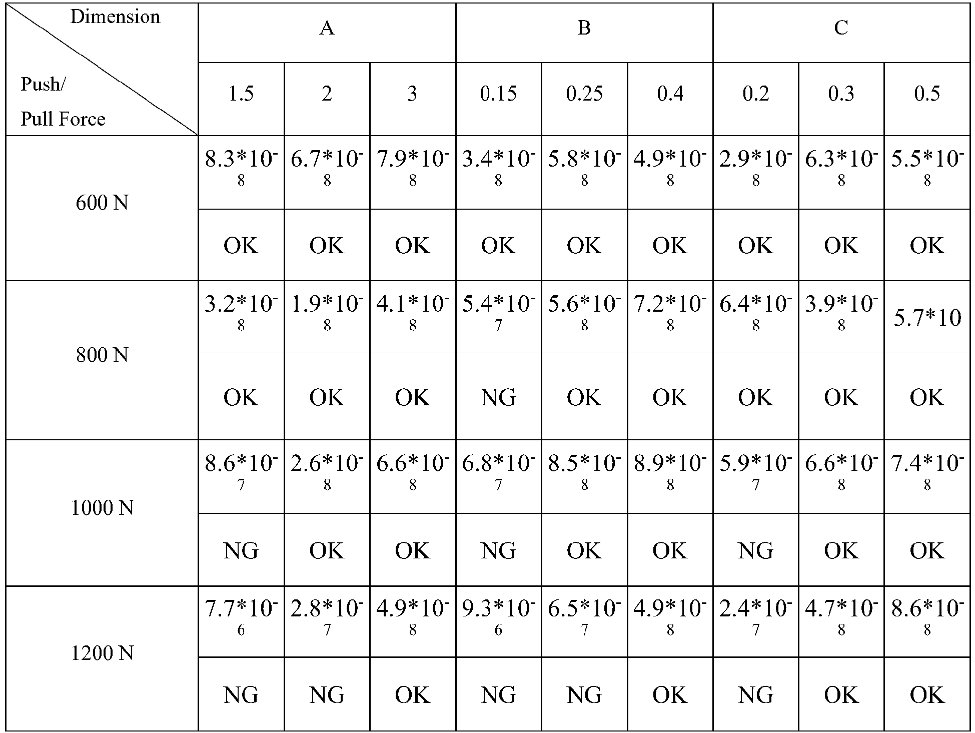

The following conclusions can be drawn with reference to Table 1 above.
1. Comparing the effects of the magnitudes of A on the push resistance performance of the cover plate, it is found that the larger the A is, the higher the push force the cover plate can withstand. When A < 2 mm, the cover plate cannot meet the general industry requirement of withstanding a push force of 1000 N. Therefore, the lower limit value of A is set to 2 mm.
2. Comparing the effects of the magnitudes of B on the tensile resistance performance of the cover plate, it is found that the magnitude of B has a considerable effect on the push resistance performance of the cover plate. The larger the B is, the higher the push force the cover plate can withstand. When B < 0.25 mm, the cover plate cannot meet the general industry requirement of withstanding a push force of 1000 N. Therefore, the lower limit value of A is set to 0.25 mm.
3. Comparing the effects of the magnitudes of C on the push resistance performance of the cover plate, it is found that the magnitude of C has a considerable effect on the push resistance performance of the cover plate. The larger the C is, the higher the push force the cover plate can withstand. When C ≥ 0.3 mm, the cover plate can meet the general industry requirement of withstanding a push force of 1000 N or even higher. Therefore, the lower limit value of C is set to 0.3 mm.

The key dimensions H2 and H3 that affect the push-pull resistance performance of the cover plate are actually tested below with reference to the drawings and in conjunction with examples, and the test results are compared. The test data is shown in detail in Table 2.

Example 2: Six cover plates were selected, and univariate factor comparative tests were conducted on the two parameters H2 and H3, respectively. Push-pull force values of 600 N, 800 N, 1000 N, and 1200 N were applied sequentially in gradient, followed by a helium leak test. A helium leak rate <1*10⁻⁷ Pa·m³/s was considered as passing the test.

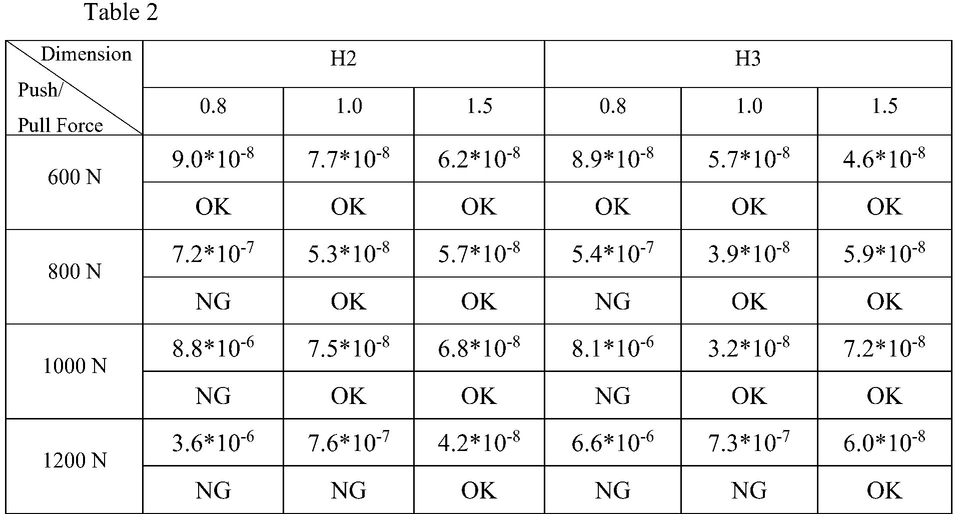

The following conclusions can be drawn with reference to Table 2 above.
1. Comparing the effects of the magnitudes of H2 on the tensile resistance performance of the cover plate, it is found that the larger the H2 is, the higher the push force the cover plate can withstand. When H2 < 1.0 mm, the cover plate cannot meet the general industry requirement of withstanding a push force of 1000 N. Therefore, the lower limit value of H2 is set to 1.0 mm.
2. Comparing the effects of the magnitudes of H3 on the push resistance performance of the cover plate, it is found that the magnitude of H3 has a considerable effect on the push resistance performance of the cover plate. The larger the H3 is, the higher the push force the cover plate can withstand. When H3 < 1.0 mm, the cover plate cannot meet the general industry requirement of withstanding a push force of 1000 N. Therefore, the lower limit value of H3 is set to 1.0 mm.

The key ratios T1 and T2 that affect the push-pull resistance performance of the cover plate are actually tested below with reference to the drawings and in conjunction with examples, and the test results are compared, where T1 = (d1 - d2)/d1, and T2 = (d3 - d2)/d3. The test data is shown in detail in Table 3.

Example 3: Six cover plates were selected, and comparative tests were conducted on the two parameters T1 and T2, respectively. Push-pull force values of 600 N, 800 N, 1000 N, and 1200 N were applied sequentially in gradient, followed by a helium leak test. A helium leak rate <1*10⁻⁷ Pa·m³/s was considered as passing the test.

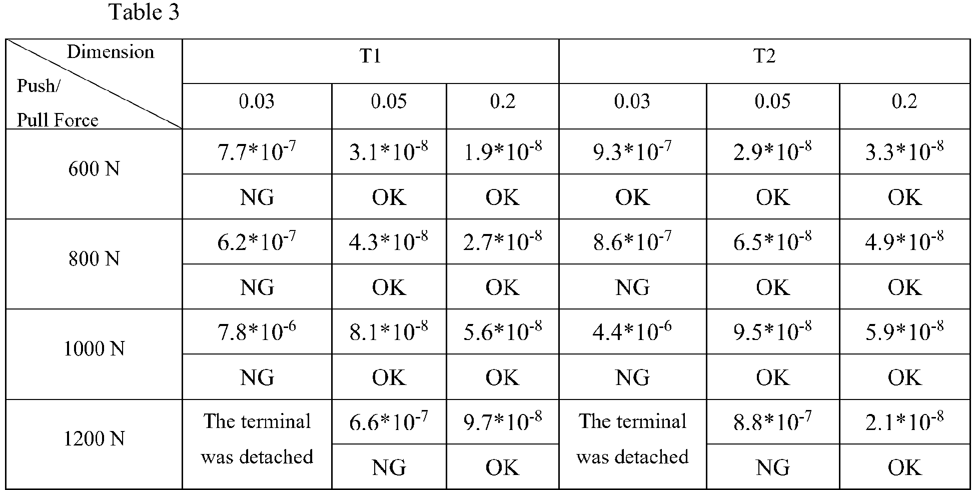

The following conclusions can be drawn with reference to Table 3 above.
1. Comparing the effects of the magnitudes of T1 on the push resistance performance of the cover plate, it is found that the larger the T1 is, the higher the push force the cover plate can withstand. When T1 < 0.05, the cover plate cannot meet the general industry requirement of withstanding a push force of 1000 N. Therefore, the lower limit value of T1 is set to 0.05.
2. Comparing the effects of the magnitudes of T2 on the tensile resistance performance of the cover plate, it is found that the magnitude of H3 has a considerable effect on the push resistance performance of the cover plate. The larger the H3 is, the higher the push force the cover plate can withstand. When T2 < 0.05, the cover plate cannot meet the general industry requirement of withstanding a tensile force of 1000 N. Therefore, the lower limit value of T2 is set to 0.05.

According to embodiments of the present application, in the other aspect, a battery is further provided, including the battery cell cover plate as described in the above.

Apparently, the above embodiments are merely examples given for clear illustration, rather than limiting the implementation modes. Although the embodiments of the present application have been described with reference to the drawings, various modifications and variations could be made by those skilled in the art without departing from the spirit and scope of the present application, and such modifications and variations all fall within the scope defined by the present application.

## Claims

1. A battery cell cover plate, **characterized by** comprising:
a cover plate body (1), through which a mounting hole is formed;
a terminal (4), provided with a limiting portion (41) directly or indirectly abutting against and fixed to one side surface of the cover plate body (1), a main step portion (42) connected to the limiting portion (41) and at least partially passing through the mounting hole, and a middle-diameter step portion (43) and a top-diameter step portion (44) sequentially provided on a side of the main step portion (42) remote from the limiting portion (41); and
a riveting block (3), riveted to the middle-diameter step portion (43) and the top-diameter step portion (44), such that the riveting block (3) directly or indirectly abuts against the other side surface of the cover plate body (1),
wherein along a radial direction of the terminal (4), the middle-diameter step portion (43) has a diameter d2, and the top-diameter step portion (44) has a diameter d3, satisfying 0.05 ≤ (d3 - d2)/d3 ≤ 0.5.

2. The battery cell cover plate as claimed in claim 1, **characterized in that** along the radial direction of the terminal (4), the main step portion (42) has a diameter d1, satisfying 0.05 ≤ (d1 - d2)/d1 ≤ 0.5, wherein 4 mm ≤ d1 ≤ 20 mm, and d1 ≥ d3 > d2.

3. The battery cell cover plate as claimed in claim 2, **characterized in that** the riveting block (3) has a riveting hole axially penetrating therethrough, a first inner hole portion (31) is formed in a region of the riveting hole corresponding to the middle-diameter step portion (43), and a second inner hole portion (32) is formed in a region of the riveting hole corresponding to the top-diameter step portion (44);
the first inner hole portion (31) has an inner hole diameter D1, satisfying 0.05 mm ≤ D1 - d2 ≤ 0.5 mm; and
the second inner hole portion (32) has an inner hole diameter D2, satisfying 0.05 mm ≤ D2 - d3 ≤ 0.5 mm.

4. The battery cell cover plate as claimed in claim 3, **characterized in that** a top surface of the top-diameter step portion (44) is flush with a top edge of the second inner hole portion (32); and the terminal (4) and the riveting block (3) are welded and connected in a region where the top surface of the top-diameter step portion (44) is in contact with the second inner hole portion (32).

5. The battery cell cover plate as claimed in claim 4, **characterized in that** along the radial direction of the terminal (4), a third inner hole portion (33) is formed in a region of the riveting hole which does not overlap with the terminal (4) in radial projection, the third inner hole portion (33) has an inner hole diameter D3, satisfying 0.8 mm ≤ D3 - D2 ≤ 4 mm, and D3 > D2 > D1.

6. The battery cell cover plate as claimed in claim 3, **characterized in that** along a radial direction of the riveting hole, a distance from the second inner hole portion (32) to an edge of the riveting block (3) is A,
A = (L - D2)/2 is satisfied, wherein L is a total width of the riveting block (3) along the radial direction of the riveting hole, a dimension of L satisfies: 10 mm ≤ L ≤ 50 mm, and a dimension of A satisfies: 2 mm ≤ A ≤ 10 mm.

7. The battery cell cover plate as claimed in claim 3, **characterized in that** along an axial direction of the terminal (4), a dimension of the top-diameter step portion (44) lapped against a region of the riveting block (3) corresponding to the first inner hole portion (31) is B, satisfying B = (d3 - D1)/2, wherein a dimension of B satisfies: 0.25 mm ≤ B ≤ 1 mm; and
along the axial direction of the terminal (4), a dimension of the main step portion (42) lapped against the region of the riveting block (3) corresponding to the first inner hole portion (31) is C, satisfying C = (d1 - D1)/2, wherein a dimension of C satisfies: 0.3 mm ≤ C ≤ 2 mm.

8. The battery cell cover plate as claimed in claim 5, **characterized in that** along a radial direction of the riveting hole, a distance between an edge of the third inner hole portion (33) and an edge of the riveting block (3) is E, satisfying E = (L - D3)/2, wherein a dimension of E satisfies: 1.5 mm ≤ E ≤ 6 mm.

9. The battery cell cover plate as claimed in claim 5, **characterized in that** along an axial direction of the riveting hole, a total height of the riveting block (3) is H, wherein a dimension of H satisfies: 2 mm ≤ H ≤ 6 mm;
along the axial direction of the riveting hole, a height difference between a top surface of the riveting block (3) and the top surface of the top-diameter step portion (44) is H1, wherein a dimension of H1 satisfies: 0.1 mm ≤ H1 ≤ 0.5 mm;
along the axial direction of the riveting hole, a height of an overlapping region between the top-diameter step portion (44) and the second inner hole portion (32) is H2, wherein a dimension of H2 satisfies: 1 mm ≤ H2 ≤ 2.5 mm; and
along the axial direction of the riveting hole, a height of an overlapping region between the middle-diameter step portion (43) and the first inner hole portion (31) is H3, wherein a dimension of H3 satisfies: 1 mm ≤ H3 ≤ 3 mm, and H3 ≥ H2 > H1.

10. A battery, **characterized by** comprising the battery cell cover plate as claimed in any one of claims 1 to 9.
